# EUROPEAN PATENT SPECIFICATION

(11) **EP 2 102 568 B1**
(45) Date of publication and mention of the grant of the patent: **02.03.2016**
(21) Application number: 06850040.4
(22) Date of filing: 29.12.2006
(51) Int. Cl.: F25D 17/00, F24F 11/00

(54) **AIR-CONDITIONING ALGORITHM FOR WATER TERMINAL FREE COOLING**
LUFTKLIMATISIERUNGSALGORITHMUS FÜR WASSERTERMINALFREIKÜHLUNG
ALGORITHME DE CLIMATISATION POUR REFROIDISSEMENT LIBRE DE TERMINAL D'EAU

(43) Date of publication of application: 23.09.2009
(73) Proprietor: Carrier Corporation, Farmington, CT 06034 (US)
(72) Inventor: JOSSERAND, Olivier, F-01120 La Boisse (FR); ROYET, Eric, F-01120 Thil (FR); GOUX, JeanPhilippe, F-69780 Toussieu (FR); RENAULT, Patrick, Lyon 69007 (FR)
(74) Representative: Taylor, Adam David
(86) International application number: PCT/US2006/049628
(87) International publication number: WO 2008/082398

(56) References cited:
- EP-A1- 0 632 234
- EP-A2- 1 004 828
- WO-A1-90/10180
- GB-A- 2 258 744
- US-A- 4 244 517
- US-A- 4 830 274
- US-A- 5 025 638
- US-A- 5 707 005
- US-A1- 2004 148 950
- US-B2- 6 634 422

## Description

### Cross Reference to Related Applications

This application is related to another patent application identified by Attorney docket number 210-1050PCT. Both are subject to assignment to Carrier Corporation and each is being filed on an even date herewith.

### Field of the Invention

The present invention is related to air-conditioning systems, and more particularly to an algorithm to optimize the free cooling mode related to controllers and systems driving hydronic products such as water terminals and air handling units.

### Background of the Invention

Usually, commercial building hydronic air-conditioning systems are made of one or more chillers or heat pumps that produce cooling and/or heating water, several water terminals, also referred to as fan coil units, and one or more air handling units that supply fresh air to the building through a duct network in order to maintain a minimum Indoor Air Quality (IAQ) for the comfort of building occupants. Some of these air handlers are energy recovery ventilation systems.

In normal operation, coolant fluid, usually cooling and/or heating water, possibly having additives, is distributed through a pipe network from the air handling units to the local zone water terminals where it is circulated within a local zone temperature adjusting coil. Additionally, the air handling unit performs IAQ functions such as purification, filtration, or fresh air flow management. With the appropriate coolant fluid at the water terminal, its fan pushes air through its coil to condition it as needed to provide personalized local comfort such as cooling, accomplished by passing cool coolant fluid through the coil, or heating, accomplished by passing heated coolant fluid through the coil.

Usually there is one water terminal per working zone, for example, an office space, meeting room, or washroom, with each having their own local water terminal and water terminal controller. Typically, a water terminal controller is connected to a local user interface that allows for temperature selection and fan speed control. Many local zone temperature controllers are capable of being connected to a building air-conditioning system communication network enabling multiple components of the entire building air-conditioning system to communicate with each other or be monitored or controlled by a building management system that is also connected to the building air-conditioning communication network.

In usual operation, the outside air is aspirated by the air handling unit, then filtered and thermally treated (cooled or heated depending on the need) by its coil where the coolant fluid is circulated. The coil is equipped with a proportional coolant flow valve that opens or closes the coolant fluid pipe and therefore enables or disables the heat transfer. After treatment in the air handling unit, the "fresh" supply air is blown through a network of ducts to all the local zone water terminals through fresh air dampers that control the fresh airflow, usually depending on the demand. The water terminals control their own proportional coolant flow valve to provide the demanded comfort inside the controlled zone.

The outside air is conditioned in the air handler units to a level where each water terminal will have the capacity to condition it locally as needed to provide the air-conditioning required by the zone user. If the local water terminal does not have the capacity to meet the requirements of the zone, their controls open their local fresh air damper to receive the air in the ductwork that was preconditioned by the air handling unit. However, this control scheme does not take advantage of information relating to the condition of the outside air to create energy savings.

Other systems in use do not have an air handler but simply have a fan and a filter to provide fresh air flow into the building. Therefore, there is no thermal pre-treatment of the fresh air, and the water terminals control the temperature of their zones using the outside fresh air as needed without regard for the outside air temperature.

This is problematic because achievement of the desired zone temperature may be beyond the capacity of the water term inal because the outside air temperature is largely different than the zone setpoint and opening the fresh air damper may result in a change in zone temperature that is even further away from the setpoint.

In advanced technology water terminals such as demand control ventilation systems, the exact amount of fresh air needed to maintain a minimum IAQ is determined by a system that senses the level of carbon dioxide and its dilution in the zone. Typically, the carbon dioxide detection system includes a carbon dioxide sensor that communicates with a carbon dioxide controller which deduces presence or absence of humans in the zone. Based on this dilution level and the minimum IAQ, the aperture of the fresh air intake damper is adjusted to reduce the carbon dioxide level in the zone. In some cases, the resultant air flow information is returned to the local water terminal controller or to a building management system which might control a system through a physical communication bus or other remote communication technology.

While most systems use the local water terminal controller to control the air temperature, and the carbon dioxide system to control the carbon dioxide dilution in the zone by actuating their fresh air dampers, they do not employ additional sensors or controls to optimize the system by making full use of the combined information relating to the carbon dioxide dilution and outside air conditions.

EP 0632234 discloses a variable air volume system where chilled air is supplied to a number of zones each zone having a controller which can adjust the temperature of the zone by adjusting their air flow to the zone using dampers.

### Summary of the invention

The present invention provides a method to create energy savings in a local zone water terminal of an air-conditioning system of the type having an air handling unit and a building management system comprising: obtaining a signal from said building management system to enable a free cooling mode of operation, where outside air is of a temperature to satisfy the air-conditioning demand of a zone with no thermal pre-treatment of the outside air by said air; responsively opening a fresh air damper of said local zone water terminal to a fully open position, said local zone water terminal including a coil for conditioning supply air to a local zone and a cooling fan for moving air over said coil; and controlling opening of said fresh air damper and a speed of said cooling fan in response to a local temperature error point signal, which is the resultant value of the combination of a zone temperature and a zone temperature setpoint, during free cooling mode.

An air-conditioning system control scheme is provided for Implementation in local water terminals of a building air conditioning system wherein each water terminal can receive a command from a building management system to run in a variety of modes to achieve energy savings and increased water terminal cooling capacity. These modes are dependent on the temperature of the outside air measurement provided to the building management system, the local zone temperature setpoints, and the human occupancy of the air-conditioned zone.

Where the outside air is of a temperature to entirely satisfy the air-conditioning demand of the zone with no thermal pre-treatment of the air by the air handling unit, the zone is said to be in free cooling mode. There are two modes within which to run free cooling. One is when the air-conditioned zone is occupied by humans, and the other is when the air-conditioned zone is not occupied by humans.

Where the outside air is of a temperature to partially satisfy the air-conditioning demand of the zone with no thermal pre-treatment of the air by the air handling unit, the zone is said to be in pre-free cooling mode. Pre-free cooling mode is only available when the zone is unoccupied.

In one embodiment, a new water terminal control scheme achieves energy savings and free cooling of a building zone by accepting a command from a building management system to run in the free cooling mode.

In another embodiment, a new water terminal control scheme achieves energy savings and pre-free cooling of a building zone by accepting a command from a building management system to run in the pre-free cooling mode.

### Brief Description of the Drawings

For a further understanding of these and other objects of the invention, reference will be made to the following detailed description of the invention which is to be read in connection with the accompanying drawing, where:
FIG. 1 diagrammatically depicts an air handling unit and a connection to an exemplary water terminal wherein the controllers of both are connected to a building communication network that includes a Building Management System; and
FIG. 2 depicts a block diagram of the new water terminal control algorithm to illustrate programmable and sensor signals to the water terminal controller and signals to various mechanical components of the water terminal.
FIG. 3 is a depiction of the operation of the new water terminal control algorithm operating in free cooling mode in the occupied mode; and
FIG. 4 is a depiction of the operation of the new algorithm operating in free cooling mode in the unoccupied mode.

### Detailed Description

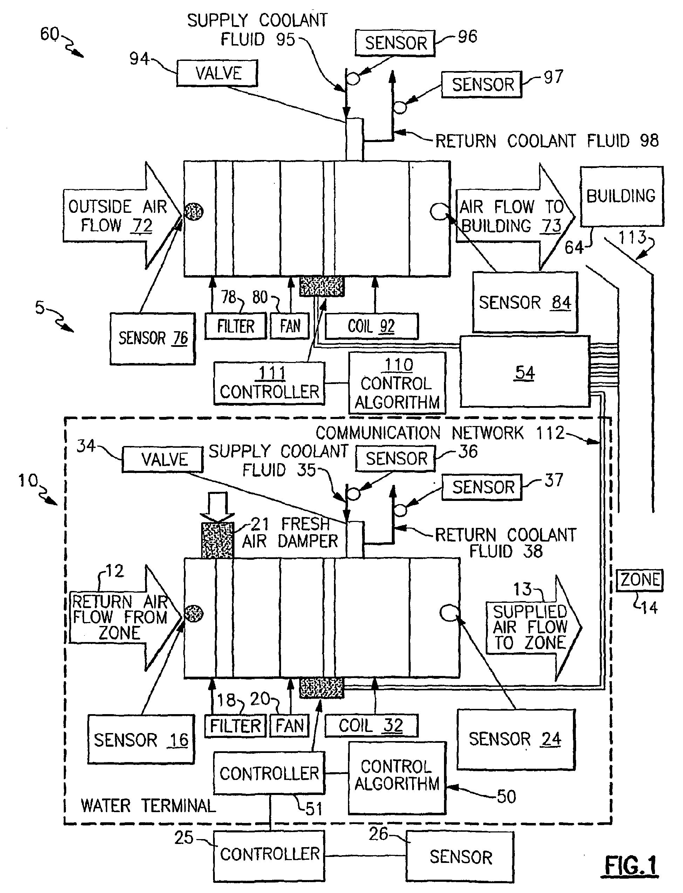

Referring initially to FIG. 1, there is illustrated a diagrammatical depiction of a building air-conditioning system generally referenced at **5,** for conditioning the air of a building **64,** wherein the air handling unit generally referenced at **60,** the exemplary water terminal generally referenced at **10,** equipped with a fresh air damper **21,** the building air-conditioning system communication network **112,** and the building fresh air duct network **113,** comprise the major components of the system.

The air handling unit **60,** is illustrated with a direction of outside air flow **72,** coming into it from outdoors, and a direction of air exiting the air handling unit **60,** as air flow **73,** to the building **64.** Outside air flow **72,** entering the air handling unit **60,** passes over an outside air temperature sensor **76,** then through an air handling unit filter **78,** at least one air handling unit fan **80,** an air handling unit temperature adjusting coil **92,** and finally over an air handling unit supply air temperature sensor **84.**

An air handling unit supply side proportional coolant fluid flow valve **94**,is disposed in the piping that the supplies the air handling unit supply coolant fluid **95,** to the supply side of the air handling unit air temperature adjusting coil **92.** The temperature of the air handling unit supply coolant fluid **95,** is monitored by an air handling unit supply coolant fluid temperature sensor **96.** The temperature of the air handling unit return coolant fluid **98**, from the air handling unit air temperature adjusting coil **92,** is monitored by an air handling unit return coolant fluid temperature sensor **97.**

Also shown is an air handling unit controller **111,** which runs an air handling unit control algorithm **110,** that communicates with a building management system **54,** through a building air-conditioning system communication network **112.** The building air-conditioning system communication network **112,** can be hard wired or wireless, and may or may not include a building management system.

As shown in FIG.1, a building management system **54,** uses the building air-conditioning system communication network **112,** to communicate with numerous air-conditioning system components. FIG. 1 depicts exemplary component communications between an air handling unit controller **111,** a building management system **54,** and a water terminal controller **51,** which is used to control a local zone water terminal generally shown at **10.**

The water terminal controller **51,** that executes the water terminal control algorithm **50,** contains a microprocessor having a clock speed of at least 16 MHz, internal RAM memory of at least 3.84 Kbytes, internal FLASH memory of at least 128 Kbytes, internal E² memory of at least 1 K Byte, a built in A/D converter of at least 10 bits with a 1 LSB error, and a watchdog that is on chip hardware.

Local zone water terminal **10,** provide air-conditioning for a zone **14,** in the air conditioned building **64.** In this example, where the air handler unit controller **111,** the building management system **54,** and the water terminal controller **51,** are all communicating on the building air-conditioning system communication network **112,** any data input by a building management system user or collected by any sensor on any of these components can be communicated to any of the other components according to their need for the data.

Turning now to the lower portion of FIG.1, there is illustrated a diagrammatical depiction of local zone water terminal generally referenced at **10,** that illustrates a direction of air flow coming into the system **12,** from the air-conditioned zone **14,** or fresh air duct with damper **21,** and a direction of conditioned air flow exiting the system **13.** Entrance of the air flow from the zone **14,** or fresh air damper **21,** passes over a return air temperature sensor **16,** then through a supply side filter **18,** at least one supply side air fan **20,** a supply side air temperature adjusting coil **32,** and finally over a supply air temperature sensor **24.** The conditioned air is then supplied to the zone **14.** The air in the zone **14,** is monitored by carbon dioxide sensor **26,** which is connected to a carbon dioxide controller **25,** that is capable of providing signals to the water terminal controller **51,** to determine the occupancy status of the zone **14.**

A supply side proportional coolant fluid flow valve **34** is disposed in the piping that the supplies the supply coolant fluid **35** to the supply side of the air temperature adjusting coil **32.** The temperature of the supply coolant fluid **35** is monitored by a supply coolant fluid temperature sensor **36.** The temperature of the return coolant fluid **38,** from the air temperature adjusting coil **32** is monitored by a return coolant fluid temperature sensor **37.**

Free Cooling is a air-conditioning system control scheme wherein energy savings are achieved by reducing the speeds of the local water terminal cooling fans **20,** and disabling the thermal pre-treatment functions of the air handling units **60,** to allow outside air **72,** to pass directly through the air handlers **60,** the building fresh air duct network **113,** and fresh air damper **21,** of the local water terminal **10,** that can locally condition the air with only minor temperature adjustments as necessary to provide the desired air-conditioning to the zone **14.**

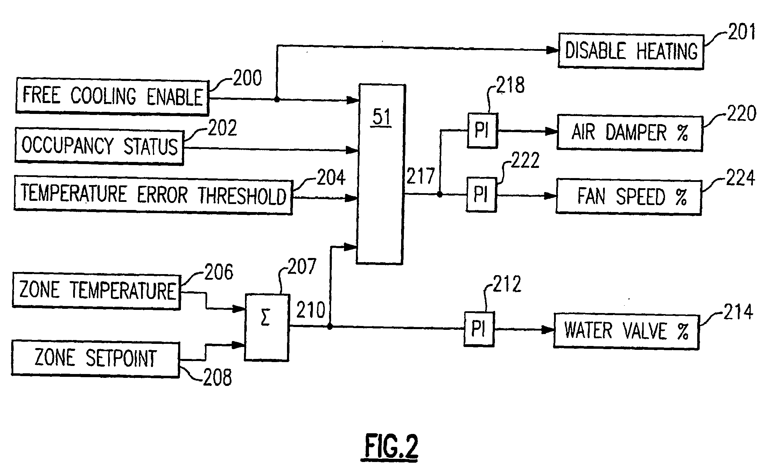

Turning now to FIG. 2, a block diagram of the new water terminal control algorithm **50,** is provided which illustrates the various programmable and sensor signals to the water terminal controller **51,** and signals to various mechanical components of the water terminal **10.**

Most clearly relevant is the Free Cooling Enable Signal **200,** to the water terminal controller **51,** from a building management system **54,** that continuously monitors the signal provided by the outside air temperature sensor **76.** If the building management system determines that free cooling will be effective, it will enable the Free Cooling Enable Signal **200,** in the water terminal controller **51**. The next signal depicted in the block diagram is the Occupancy Status Signal **202** of the zone **14.** This is sensed by a local carbon dioxide sensor **26,** and communicated to the water terminal controller **51,** by the carbon dioxide controller **25.** The Occupancy Status Signal **202,** is used to determine the mode, occupied or unoccupied, of free cooling to run when a Free Cooling Enable Signal **200,** is received by the water terminal controller 51.

The next signal to the water terminal controller **51,** is a user programmable Temperature Error Threshold Signal **204.** Finally, there is a Local Temperature Error Point Signal **210,** which is the resultant value of the combination in symbolic sigma block **207,** that combines the values of the zone temperature **206**, and the zone setpoint **208.**

The Heating System Enable Variable **201,** is controlled outside the new water terminal control algorithm **50,** and is directly based on the Free Cooling Enable Signal **200.** If the Free Cooling Enable Signal **200,** is enabled by the building management system **54,** the Heating System Enable Mode **201,** is disabled. Additionally, if the Free Cooling Enable Signal **200,** is enabled by the building management system **54,** the Proportional Coolant Fluid Valve Percent Opening signal **214,** is simply generated by the Local Temperature Error Point Signal **210,** after it passes through the PI block **212,** for conditioning thereby placing the valve in a simple proportional-integral control loop depending on the zone local temperature error.

Water terminal control algorithm **50,** takes the aforementioned signals and logically processes them to yield a Fresh Air Damper and Cooling Fan signal **217,** which is separately conditioned through PI block **218,** to generate an Air Damper Percent Opening Signal **220,** and through PI block **222,** to generate a Cooling Fan Percent Speed Signal **224.** When free cooling mode is enabled, the fresh air damper **21,** will be fully opened to intake as much air from the air handling unit **60,** as possible.

If in the occupied mode, the speed of the water terminal cooling fans **20,** is minimized. In unoccupied mode, the speed of the water terminal cooling fans **20,** is also minimized unless the Zone Temperature **206,** is greater than the user programmable Temperature Error Threshold Signal **204,** at which point the speed of the water terminal cooling fans **20,** will be set to an automatic mode to until the local water terminal **10**, reduces the zone temperature **206,** to a point below the user programmable Temperature Error Threshold Signal **204.**

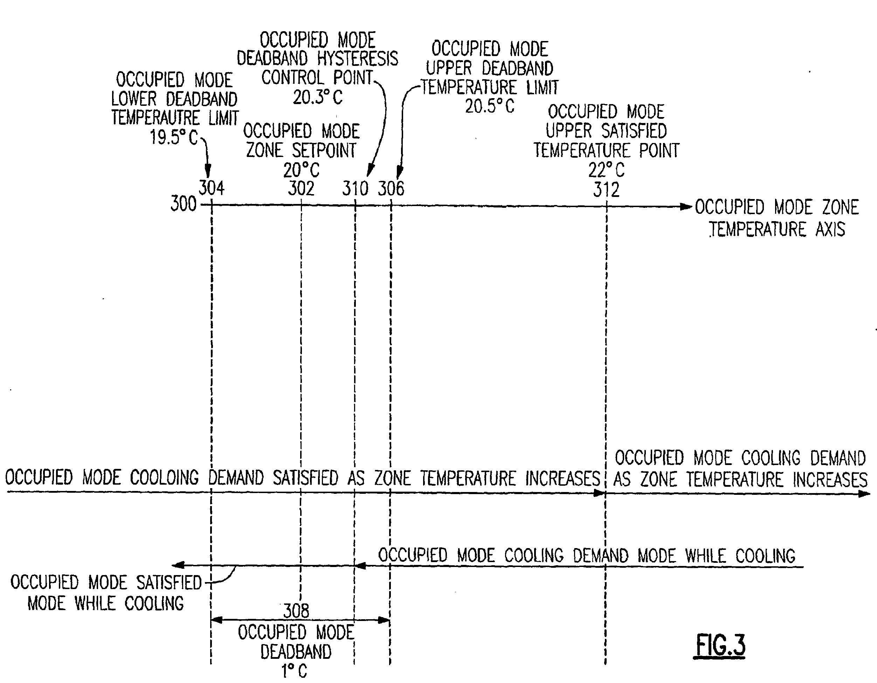

Turning the FIG. 3, there is an exemplary graphical depiction of the operation of the water terminal control algorithm **50,** implementing free cooling in the occupied mode. An axis of the graph is depicted as the zone temperature **206,** increases moving from left to right along the axis **300.**

While various Occupied Mode Zone Setpoints **302,** and Occupied Mode Deadbands **308,** may be selected based on a particular application, the calculation and determination of resultant control points by the control algorithm remains the same.

In Fig. 3, an Occupied Mode Zone Setpoint **302,** is shown to be 20 degrees Celsius, an Occupied Mode Lower Deadband Temperature Limit **304,** is shown to be 19.5 degrees Celsius, and an Occupied Mode Upper Deadband Temperature Limit **306,** is shown to be 20.5 degrees Celsius, to yield an Occupied Mode Deadband **308,** which in this case, is 1.0 degree Celsius, about the Occupied Mode Zone Setpoint **302.** The overall function of the air handling unit **60,** is to provide fresh air to ensure that the local water terminal can maintain their zone **14,** temperature within Occupied Mode Deadband **308.**

Within the Occupied Mode Deadband **308,** is a control point that implements a 0.2 degree Celsius Occupied Mode Deadband Hysteresis Control Point **310.** This value is calculated using the Occupied Mode Zone Setpoint **302,** plus one half of the Occupied Mode Deadband **306,** minus 0.2 degrees Celsius.

When the zone temperature **206,** is being reduced to any temperature below the Occupied Mode Hysteresis Control Point **310,** or is being increased to the Occupied Mode Upper Satisfied Temperature Point **312,** which is calculated by adding the zone setpoint 302, plus the deadband 308 plus 1 degree Celsius, to the Occupied Mode Upper Satisfied Temperature Limit **312,** in this case 22 degrees Celsius, the control algorithm **50,** determines that the occupied mode cooling demand is satisfied. In all other instances, the control algorithm **50,** determines that the system is in cooling demand mode.

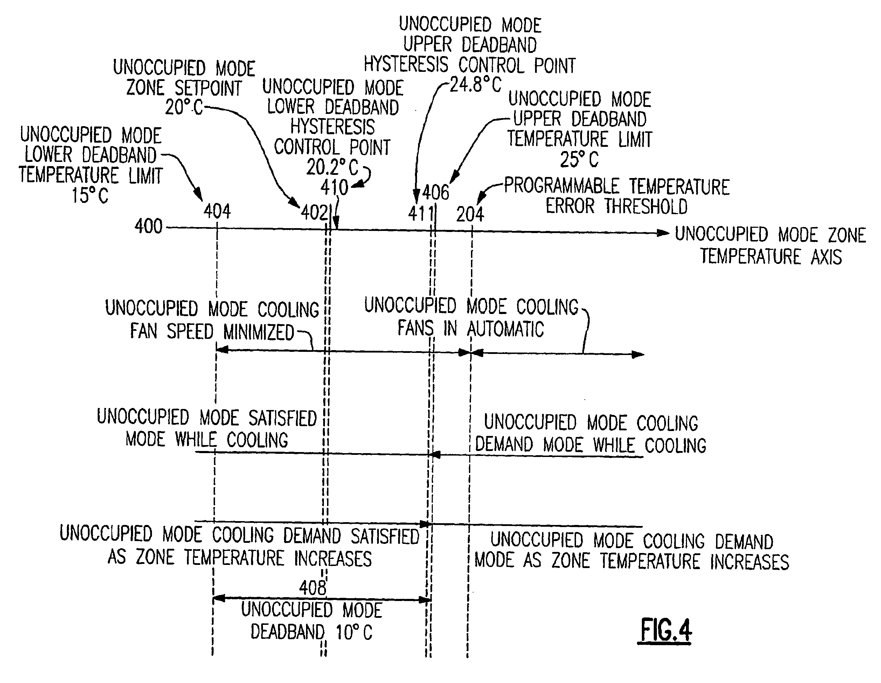

Turning the FIG. 4, there is an exemplary graphical depiction of the operation of the water terminal control algorithm **50,** implementing free cooling in the unoccupied mode. An axis of the graph is depicted as the zone temperature **206,** increases moving from left to right along the axis **400.**

While various Unoccupied Mode Zone Setpoints **402,** and Unoccupied Mode Deadbands **408,** may be selected based on a particular application, the calculations and determination of resultant control points by the control algorithm remains the same.

In Fig. 4, an Unoccupied Mode Zone Setpoint **402,** is shown to be 20 degrees Celsius, an Unoccupied Mode Lower Deadband Temperature Limit **404,** is shown to be 15 degrees Celsius, and an Unoccupied Mode Upper Deadband Temperature Limit **406,** is shown to be 25 degrees Celsius, to yield an Unoccupied Mode Deadband **408,** in this case, 10 degrees Celsius, about the Unoccupied Mode Zone Setpoint **402.** The overall function of the air handling unit 60, is to provide fresh air to ensure that the local water terminal can maintain their zone temperature 206, within Deadband **408.**

Within the Unoccupied Mode Deadband **408,** is a control point that implements a 0.2 degree Celsius lower Unoccupied Mode Deadband Hysteresis Control Point **410.** This value is calculated by adding 0.2 degrees Celsius to the Unoccupied Mode Zone Setpoint **402.**

Also within the Unoccupied Mode Deadband **408,** is an Unoccupied Mode Upper Deadband Hysteresis Control Point **411,** that is calculated by adding the zone setpoint **402,** plus one half of the Unoccupied Mode Upper Deadband Temperature Limit **406,** and subtracting 0.2 degrees Celsius for a result, in this case, of 24.8 degrees Celsius.

When the zone temperature **206,** is being reduced to any temperature below the Unoccupied Mode Upper Hysteresis Control Point **411,** or is being increased to the Unoccupied Mode Upper Deadband Temperature Limit **406,** the control algorithm **50,** determines that the cooling demand is satisfied. In all other instances, the control algorithm **50,** determines that the system is in cooling demand mode.

As noted above, in unoccupied mode, the speed of the water terminal cooling fans **20,** are minimized unless the zone temperature **206,** is above the programmable Temperature Error Threshold Signal **204,** at which point the speed of the water terminal cooling fans **20,** will be set to an automatic mode to allow them to reduce the zone temperature **206,** below the programmable Temperature Error Threshold Signal **204.**

Pre-Free Cooling, used in the unoccupied mode, is an air-conditioning control scheme where the desired fresh air **73,** for cooling a zone **14,** is lower than the outside air **72,** temperature, zone temperature **206,** is higher than the outside air **72,** so pushing non-conditioned outside air **72,** into the system can still yield significant building temperature reduction without having to use the air-conditioning component of the air handling unit **60.** This will be effective until the outside air **72,** brings the building to as low a temperature as possible, equal to the outside temperature, at which point the air-conditioning components of the air handling unit **60,** and water terminals **10,** will need to be activated to finish the cooling to the desired zone temperature setpoint **208.**

Much in the same way as Free Cooling and Pre-Free Cooling are implemented using outside air, Free- Heating is contemplated a variation of these aforementioned air-conditioning control schemes.

While the present invention has been particularly shown and described with reference to the preferred mode as illustrated in the drawing, it will be understood by one skilled in the art that various changes in detail may be effected therein without departing from the scope of the invention as defined by the claims.

## Claims

1. A method to create energy savings in a local zone water terminal (10) of an air-conditioning system (5) of the type having an air handling unit (60) and a building management system (54) comprising:
obtaining a signal from said building management system to enable a free cooling mode of operation, where outside air is of a temperature to satisfy the air-conditioning demand of a zone with no thermal pre-treatment of the outside air by said air handling unit;
responsively opening a fresh air damper (21) of said local zone water terminal to a fully open position, said local zone water terminal including a coil (32) for conditioning supply air to a local zone (14) and a cooling fan (20) for moving air over said coil; and
controlling opening of said fresh air damper and a speed of said cooling fan in response to a local temperature error point signal,(210), which is the resultant value of the combination of a zone temperature (206) and a zone temperature setpoint (208), during free cooling mode.

2. The method of Claim 1 further comprising the steps of:
responsively disabling a heating mode of said local zone water terminal.

3. The method of Claim 1 further comprising the steps of:
obtaining said zone temperature (206);
obtaining said zone temperature setpoint;
comparing said zone temperature with said zone temperature setpoint to obtain said local temperature error point signal.

4. The method of Claim 3 further comprising the steps of:
responsively operating a local zone proportional coolant fluid flow control valve (34) in a proportional-integral control loop depending on said local temperature error.

5. The method of Claim 1 further comprising the steps of:
determining that said local zone is occupied; and
responsively minimizing the speed of at least one cooling fan of said local zone water terminal.

6. The method of Claim 5 further comprising the steps of:
obtaining said zone temperature;
obtaining said zone temperature setpoint;
obtaining an occupied mode zone temperature control deadband (308);
determining an occupied mode lower deadband temperature limit (304);
determining an occupied mode upper deadband temperature limit (306);
determining an occupied mode deadband hysteresis control point (310); and
determining an occupied mode upper satisfied temperature limit (312).

7. The method of Claim 6 further comprising the steps of:
determining whether said zone temperature is being reduced or increased.

8. The method of Claim 7 further comprising the steps of:
determining that said zone temperature is being reduced; and
changing from cooling demand mode to cooling satisfied mode as the temperature reduces to said occupied mode deadband hysteresis control point.

9. The method of Claim 7 further comprising the steps of:
determining that said zone temperature is being increased; and
changing from cooling satisfied mode to cooling demand mode as the temperature rises to said occupied mode upper satisfied temperature point.

10. The method of Claim 1 further comprising the steps of:
determining that said local zone is unoccupied;
obtaining said zone temperature (206); and
obtaining a temperature threshold value.

11. The method of Claim 10 further comprising the steps of:
comparing said zone temperature with said local air temperature threshold value;
determining that said local air temperature is lower than said temperature threshold; and
responsively minimizing the speed of at least one cooling fan of said local zone water terminal.

12. The method of Claim 10 further comprising the steps of:
comparing said zone temperature with said local air temperature threshold value;
determining that said zone temperature is higher than said local air temperature threshold; and
responsively controlling the speed of at least one of said cooling fans of said local zone water terminal in an automatic mode.

13. The method of Claim 10 further comprising the steps of:
obtaining said zone temperature;
obtaining said zone temperature setpoint;
obtaining an unoccupied mode zone temperature control deadband (408);
determining an unoccupied mode lower deadband temperature limit (404);
determining an unoccupied mode upper deadband temperature limit (406);
determining an unoccupied mode lower deadband hysteresis control point (410); and;
determining an unoccupied mode upper deadband hysteresis control point (411).

14. The method of Claim 13 further comprising the steps of:
determining whether said zone temperature is being reduced or increased.

15. The method of Claim 14 further comprising the steps of:
if said zone temperature is being reduced, responsively changing from cooling demand mode to cooling satisfied mode as the temperature reduces to the unoccupied mode deadband hysteresis control point; or
if said zone temperature is being increased, changing from cooling satisfied mode to cooling demand mode as the temperature rises to the unoccupied mode upper deadband temperature limit.

## Patentansprüche

1. Verfahren zur Schaffung von Energieeinsparungen bei einem lokalen Wasseranschluss (10) eines Klimatisierungssystems (5) der Art, die ein Lüftungsaggregat (60) und ein Gebäudemanagementsystem (54) aufweist, umfassend:
Erhalten eines Signals von dem Gebäudemanagementsystem, um eine frei kühlende Betriebsweise zu ermöglichen, wobei Außenluft eine Temperatur aufweist, die der Klimatisierungsanforderung eines Bereichs ohne thermische Vorbehandlung der Außenluft durch das Lüftungsaggregat genügt;
reagierendes Öffnen einer Frischluftklappe (21) des lokalen Wasseranschlusses in eine vollständig geöffnete Position, wobei der lokale Wasseranschluss ein Spule (32) zum Konditionieren der Luftzufuhr an einen lokalen Bereich (14) und ein Kühlgebläse (20) zum Bewegen von Luft über die Spule umfasst; und
Steuern des Öffnens der Frischluftklappe und einer Geschwindigkeit des Kühlgebläses als Reaktion auf ein Punktsignal für einen lokalen Temperaturfehler (210), welches der resultierende Wert aus der Kombination einer Bereichstemperatur (206) und eines Bereichstemperatur-Sollwerts (208) ist, während der freien kühlenden Betriebsweise.

2. Verfahren nach Anspruch 1, ferner umfassend die folgenden Schritte:
reagierendes Deaktivieren eines Heizbetriebs des lokalen Wasseranschlusses.

3. Verfahren nach Anspruch 1, ferner umfassend die folgenden Schritte:
Erhalten der Bereichstemperatur (206);
Erhalten des Bereichstemperatur-Sollwerts;
Vergleichen der Bereichstemperatur mit dem Bereichstemperatur-Sollwert, um das Punktsignal für einen lokalen Temperaturfehler zu erhalten.

4. Verfahren nach Anspruch 3, ferner umfassend die folgenden Schritte:
reagierendes Betreiben eines lokalen proportionalen Kühlfluidstromregelventils (34) in einer proportional-integralen Regelschleife in Abhängigkeit von dem lokalen Temperaturfehler.

5. Verfahren nach Anspruch 1, ferner umfassend die folgenden Schritte:
Bestimmen, dass der lokale Bereich belegt ist; und
reagierendes Minimieren der Geschwindigkeit mindestens eines Kühlgebläses des lokalen Wasseranschlusses.

6. Verfahren nach Anspruch 5, ferner umfassend die folgenden Schritte:
Erhalten der Bereichstemperatur;
Erhalten des Bereichstemperatur-Sollwerts;
Erhalten einer Steuertotzone für die Bereichstemperatur eines belegten Modus (308);
Bestimmen einer Temperaturuntergrenze einer Totzone eines belegten Modus (304);
Bestimmen einer Temperaturobergrenze einer Totzone eines belegten Modus (306);
Bestimmen eines Steuerpunkts einer Totzonenhysterese eines belegten Modus (310); und
Bestimmen einer eingehaltenen Temperaturobergrenze eines belegten Modus (312).

7. Verfahren nach Anspruch 6, ferner umfassend die folgenden Schritte:
Bestimmen, ob die Bereichstemperatur verringert oder erhöht wird.

8. Verfahren nach Anspruch 7, ferner umfassend die folgenden Schritte:
Bestimmen, dass die Bereichstemperatur verringert wird; und
Wechseln von einem Kühlbedarfsmodus zu einem eingehaltenen Kühlmodus, wenn die Temperatur auf den Steuerpunkt einer Totzonenhysterese eines belegten Modus reduziert wird.

9. Verfahren nach Anspruch 7, ferner umfassend die folgenden Schritte:
Bestimmen, dass die Bereichstemperatur erhöht wird; und
Wechseln von einem eingehaltenen Kühlmodus zu einem Kühlbedarfsmodus, wenn die Temperatur auf den oberen eingehaltenen Temperaturpunkt eines belegten Modus ansteigt.

10. Verfahren nach Anspruch 1, ferner umfassend die folgenden Schritte:
Bestimmen, dass der lokale Bereich nicht belegt ist;
Erhalten der Bereichstemperatur (206); und
Erhalten eines Temperaturgrenzwerts.

11. Verfahren nach Anspruch 10, ferner umfassend die folgenden Schritte:
Vergleichen der Bereichstemperatur mit dem lokalen Lufttemperaturgrenzwert;
Bestimmen, dass die lokale Lufttemperatur niedriger als der Temperaturgrenzwert ist; und
reagierendes Minimieren der Drehzahl mindestens eines Kühlgebläses des lokalen Wasseranschlusses.

12. Verfahren nach Anspruch 10, ferner umfassend die folgenden Schritte:
Vergleichen der Bereichstemperatur mit dem lokalen Lufttemperaturgrenzwert;
Bestimmen, dass die Bereichstemperatur höher als der lokale Lufttemperaturgrenzwert ist; und
reagierendes Steuern der Geschwindigkeit mindestens eines der Kühlgebläse des lokalen Wasseranschlusses in einem Automatikbetrieb.

13. Verfahren nach Anspruch 10, ferner umfassend die folgenden Schritte:
Erhalten der Bereichstemperatur;
Erhalten des Bereichstemperatur-Sollwerts;
Erhalten einer Steuertotzone für die Bereichstemperatur eines nicht belegten Modus (408);
Bestimmen einer Temperaturuntergrenze einer Totzone eines nicht belegten Modus (404);
Bestimmen einer Temperaturobergrenze einer Totzone eines nicht belegten Modus (406);
Bestimmen eines Steuerpunkts einer unteren Totzonenhysterese eines nicht belegten Modus (410); und;
Bestimmen eines Steuerpunkts einer oberen Totzonenhysterese eines nicht belegten Modus (411).

14. Verfahren nach Anspruch 13, ferner umfassend die folgenden Schritte:
Bestimmen, ob die Bereichstemperatur verringert oder erhöht wird.

15. Verfahren nach Anspruch 14, ferner umfassend die folgenden Schritte:
wenn die Bereichstemperatur verringert wird, reagierendes Wechseln von einem Kühlbedarfsmodus zu einem eingehaltenen Kühlmodus, wenn die Temperatur auf den Steuerpunkt einer Totzonenhysterese eines nicht belegten Modus reduziert wird; oder
wenn die Bereichstemperatur erhöht wird, Wechseln von einem eingehaltenen Kühlmodus zu einem Kühlbedarfsmodus, wenn die Temperatur auf die Temperaturobergrenze einer Totzone eines nicht belegten Modus ansteigt.

## Revendications

1. Procédé pour créer des économies d'énergie dans un terminal d'eau de zone locale (10) d'un système de climatisation (5) du type présentant une unité de gestion d'air (60) et un système de gestion de bâtiment (54) comprenant:
l'obtention d'un signal dudit système de gestion de bâtiment pour activer un mode d'opération de refroidissement libre, dans lequel de l'air extérieur présente une température qui satisfait à la demande de climatisation d'une zone sans nécessiter de prétraitement thermique de l'air extérieur par ladite unité de gestion d'air;
l'ouverture par réaction d'un clapet d'entrée d'air frais (21) dudit terminal d'eau de zone locale dans une position complètement ouverte, ledit terminal d'eau de zone locale incluant une bobine (32) pour conditionner de l'air apporté à une zone locale (14) et un ventilateur de refroidissement (20) pour déplacer de l'air sur ladite bobine; et
la commande de l'ouverture dudit clapet d'entrée d'air frais et d'une vitesse dudit ventilateur de refroidissement en réponse à un signal de point d'erreur de température locale (210) qui est la valeur résultante de la combinaison d'une température de zone (206) et d'une température de zone de consigne (208) pendant le mode de refroidissement libre.

2. Procédé selon la revendication 1, comprenant en outre les étapes suivantes:
la désactivation par réaction d'un mode de chauffage dudit terminal d'eau de zone locale.

3. Procédé selon la revendication 1, comprenant en outre les étapes suivantes:
l'obtention de ladite température de zone (206);
l'obtention de ladite température de zone de consigne;
la comparaison de ladite température de zone avec ladite température de zone de consigne pour obtenir ledit signal de point d'erreur de température locale.

4. Procédé selon la revendication 3, comprenant en outre les étapes suivantes:
l'actionnement par réaction d'une soupape de commande (34) de flux de fluide de refroidissement proportionnelle de zone locale dans une boucle de contrôle proportionnelle et intégrale selon ladite erreur de température locale.

5. Procédé selon la revendication 1, comprenant en outre les étapes suivantes:
la détermination que ladite zone locale est occupée; et
la réduction par réaction de la vitesse d'au moins un ventilateur de refroidissement dudit terminal d'eau de zone locale.

6. Procédé selon la revendication 5, comprenant en outre les étapes suivantes:
l'obtention de ladite température de zone;
l'obtention de ladite température de zone de consigne;
l'obtention d'une zone morte de contrôle de température de zone de mode occupé (308);
la détermination d'une limite de température de zone morte inférieure de mode occupé (304);
la détermination d'une limite de température de zone morte supérieure de mode occupé (306);
la détermination d'un point de contrôle d'hystérèse de zone morte de mode occupé (310); et
la détermination d'une limite de température satisfaite supérieure de mode occupé (312).

7. Procédé selon la revendication 6, comprenant en outre les étapes suivantes:
la détermination si ladite température de zone est en cours de diminution ou d'augmentation.

8. Procédé selon la revendication 7, comprenant en outre les étapes suivantes:
la détermination que ladite température de zone est en cours de diminution; et
le changement du mode de demande de refroidissement au mode satisfait de refroidissement lorsque la température diminue jusqu'audit point de contrôle d'hystérèse de zone morte de mode occupé.

9. Procédé selon la revendication 7, comprenant en outre les étapes suivantes:
la détermination que ladite température de zone est en cours d'augmentation; et
le changement du mode satisfait de refroidissement au mode de demande de refroidissement lorsque la température augmente jusqu'audit point de température satisfait supérieur de mode occupé.

10. Procédé selon la revendication 1, comprenant en outre les étapes suivantes:
la détermination que ladite zone locale est inoccupée;
l'obtention de ladite température de zone (206); et
l'obtention d'une valeur seuil de température.

11. Procédé selon la revendication 10, comprenant en outre les étapes suivantes:
la comparaison de ladite température de zone avec ladite valeur seuil de température d'air local;
la détermination que ladite température d'air local est inférieure audit seuil de température; et
la réduction par réaction de la vitesse d'au moins un ventilateur de refroidissement dudit terminal d'eau de zone locale.

12. Procédé selon la revendication 10, comprenant en outre les étapes suivantes:
la comparaison de ladite température de zone avec ladite valeur seuil de température d'air local;
la détermination que ladite température de zone est supérieure audit seuil de température d'air local; et
le contrôle par réaction de la vitesse d'au moins un des ventilateurs de refroidissement dudit terminal d'eau de zone locale dans un mode automatique.

13. Procédé selon la revendication 10, comprenant en outre les étapes suivantes:
l'obtention de ladite température de zone;
l'obtention de ladite température de zone de consigne;
l'obtention d'une zone morte de contrôle de température de zone de mode inoccupé (408);
la détermination d'une limite de température de zone morte inférieure de mode inoccupé (404);
la détermination d'une limite de température de zone morte supérieure de mode inoccupé (406);
la détermination d'un point de contrôle d'hystérèse de zone morte inférieure de mode inoccupé (410); et
la détermination d'un point de contrôle d'hystérèse de zone morte supérieure de mode inoccupé (411).

14. Procédé selon la revendication 13, comprenant en outre les étapes suivantes:
la détermination si ladite température de zone est en cours de diminution ou d'augmentation.

15. Procédé selon la revendication 14, comprenant en outre les étapes suivantes:
si ladite température de zone est en cours de diminution, le changement par réaction du mode de demande de refroidissement au mode satisfait de refroidissement lorsque la température diminue jusqu'au point de contrôle d'hystérèse de zone morte de mode inoccupé; ou
si ladite température de zone est en cours d'augmentation, le changement du mode satisfait de refroidissement au mode de demande de refroidissement lorsque la température augmente jusqu'à la limite de température de zone morte supérieure de mode inoccupé.
